# EUROPÄISCHE PATENTSCHRIFT

(11) **EP 0 379 895 B1**
(45) Veröffentlichungstag und Bekanntmachung des Hinweises auf die Patenterteilung: **05.01.1994**
(21) Anmeldenummer: 90100506.6
(22) Anmeldetag: 11.01.1990
(51) Int. Cl.: G21F 9/02, B01J 20/18

(54) **Verfahren zur Entfernung von Jod und Jodverbindungen aus wasserstoffhaltigen Gasen und Dämpfen**
Process for removal of iodine and iodine compounds from hydrogen containing gases and vapours
Procédé d'élimination d'iode et des composés de l'iode de gaz et de vapeurs contenant de l'hydrogène

(30) Priorität: 21.01.1989 DE 3901784; 06.02.1989 DE 3903445
(43) Veröffentlichungstag der Anmeldung: 01.08.1990
(73) Patentinhaber: BAYER AG, 51368 Leverkusen (DE); KERNFORSCHUNGSZENTRUM KARLSRUHE GMBH, D-76021 Karlsruhe (DE)
(72) Erfinder: Jürgen, Wilhelm, D-7519 Gondelsheim (DE); Lothar, Puppe, Dr., D-5093 Burscheid (DE)

(56) Entgegenhaltungen:
- DE-A- 2 841 565
- US-A- 4 088 737
- PATENT ABSTRACTS OF JAPAN vol. 10, no. 94 (C-338)(2151) 11 April 1986, & JP-A-60 225 638

## Beschreibung

Die Erfindung betrifft ein Verfahren zur raschen und wirksamen Entfernung von Iod und/oder organischen Iodverbindungen mit einer niedrigen Anzahl von Kohlenstoffatomen, inbesondere aus wasserstoffhaltigen Gasen und/oder Dämpfen, unter Einsatz von silberbleiausgetauschtem Zeolith X.

Zur Entfernung von organischen Iodverbindungen und/oder Iod aus Gasen, inbesondere zur Abscheidung von radioaktivem Spaltprodukt-Iod aus Atmosphären in kerntechnischen Anlagen, ist es bekannt, Aktiv-Kohle oder mit Iod und/oder Iodid imprägnierte Aktiv-Kohle anzuwenden. R.E. Adams, R.D. Ackley; Kapitel 2.1: "Trapping of Radioactive Iodine and Methyl Iodide by Iodized Charcoal" in Nuclear Safety Program Annual Progress Report für Period Ending December 31, 1967. ORNL-4228 (April 1968, S. 99 bis 114). Auch aminimprägnierte Aktivkohle werden benutzt.

Dieses Adsorptionsmaterial ist jedoch nicht überall verwendbar, da es brennbar ist und bei relativ niedrigen Temperaturen, beispielsweise 150°C, das absorbierte Iod in nennenswerten Mengen bereits wieder freigibt. Treten höhere Temperaturen im zu reinigenden Gas auf, oder muß mit einer starken Erwärmung des Adsorbermaterials durch die Zerfallswärme radioaktiver Spaltprodukte gerechnet werden, müssen temperaturfeste und unbrennbare Materialien verwendet werden.

Es wurde festgestellt, das Spaltprodukt-Iod nicht nur in elementarer Form, sondern in Form von organischen Verbindungen niederer Kohlenstoffzahl, beispielsweise in Form von radioaktivem Methyliodid, in Abgasen kerntechnischer Anlagen auftritt. Aus diesem Grunde müssen Adsorbermaterialien, die allgemein verwendbar sein sollen, in gleichem Maße auch organische Iodverbindungen zurückhalten.

Andere, zur Iodabscheidung eventuell bei genau definierten Adsorptionsbedingungen brauchbare Adsorbermaterialien, wie z.B. silberimprägnierte, keramische Sinterprodukte (sogenannte Berl-Sättel), silberbeschichtete Kupferspäne oder silberbeschichtetes Silicagel, sind entweder wenig bzw. überhaupt nicht effektiv für die Zurückhaltung von Methyliodid und/oder verlieren ihre Wirksamkeit bei Durchgang von Heißdampf. Darüberhinaus besitzt imprägniertes Silicagel die Eigenschaft, Wasser aufzunehmen und dadurch seine Festigkeit einzubüßen.

Diese Materialien sind daher für eine allgemeine Anwendung, d.h. für eine Verwendung in verschiedenartigen Iodentfernungsanlagen unter gegebenenfalls unterschiedlichen, evtl. sogar rasch wechselnden, Adsorptionsbedingungen, beispielsweise während eines Unfalls oder nach einem Unfall, unbrauchbar.

Die in der DE-OS 2 109 146 beschriebenen silberimprägnierten Sorptionsmittel-Formteilchen, die überwiegend aus amorpher Kieselsäure bestehen zeigen zwar eine hohe Sorption für Iod bzw. Iodverbindungen und sind gegen Heißdampf beständig, haben aber den Nachteil, daß die Salzimprägnierung unter den Heißdampfbedingungen bei 150°C bereits ausgewaschen werden kann.

Gegen Auswaschungen beständig sind dagegen silberausgetauschte Molekularsiebzeolithe. Zeolithe sind Alumosilikatgerüste mit der allgemeinen Formel:

M_{m/z} [m AlO₂ n SiO₂] q H₂O

wobei M_{m/z} austauschbare Kationen, [m AlO₂ n SiO₂] das anionische Gerüst und q H₂O die sorbierte Phase bedeuten. Entsprechende Zeolithe sind beispielsweise in D.W. Breck, Zeolith Molecular Sieves, John Wiley & Sons, Inc. New York 1974 beschrieben.

Für die Iodsorption sind bereits silberausgetauschte Molekularsiebe untersucht worden. D.T. Pence, F.A. Duce, W.J. Maeck, Proceedings 12^{th} AEC Air Cleaning Conference, Oak Ridge, TN, January 1973, S. 417, J.G.

Wilhelm: "Trapping of Fission Product Iodine with Silber Impregnated Molecular Sieves, Saclay, France, November 4^{th} to 6^{th} 1969. Bericht der Gesellschaft für Kernforschung m.b.H., Karlsruhe, No. KFK-1065 (October 1969). Geeignete Molekularsiebe sind Natriumaluminosilikate, beispielsweise von einer Zusammensetzung nach der Summenformel:

Na₈₆ [ (AlO₂)₈₆ (SiO₂)₁₀₆] x H₂O

mit der Faujasitstruktur.

Bei der Behandlung mit Silbernitrat werden die Natriumionen durch Silberionen ausgetauscht. Es werden hohe Abscheidegrade für Methyliodid und elementares Iod bei hohen relativen Luftfeuchten erreicht. Nach dem Stand der Technik setzt man tongebundene silberausgetauschte Zeolithgranulate zur Iodadsorption ein. Hiermit lassen sich Abscheidegrade von 99,9 % erzielen. Um die hohen Kosten für die Iodsorptionsfilter zu senken, ist es wünschenswert, höhere Abscheidegrade zu erzielen. Dies wird dadurch erreicht, daß die Iod und/oder Iodverbindungen enthaltenden Gase oder Dämpfe durch eine Schicht aus einem silberausgetauschten binderfreien Molekularsieb vom Strukturtyp des Faujasits geleitet werden. Es lassen sich hiermit Abscheidegrade von 99,99 % erzielen.

Nach dem in US 4,008 737 beschriebenen Verfahren erfolgt die Adsorption der Jodverbindung bzw. des elementaren Jods mit Hilfe eines hochausgetauschten Silberzeoliths (> 99%). Anschließend wird das Jod mit reinem Wasserstoff als Jodwasserstoff desorbiert und danach der HJ-haltige Wasserstoffstrom über einen mit Blei ausgetauschen Zeolith geleitet, wobei der Jodwasserstoff adsorbiert wird. Bei der Desorbtion wird reiner Wasserstoff oder mit Inertgas verdünnter Wasserstoff verwendet. Die Gegenwart von Feuchtigkeit im Gas dreht den Prozeß herum. Daher wird das System vor der Desorbtion getrocknet.

Silberausgetauschte Zeolithe können jedoch unter Umständen die Rekombinationsreaktion von Wasserstoff und Sauerstoff zu Wasser katalysieren. Dieser Aspekt ist vor allem von entscheidender Bedeutung, wenn in den jodhaltigen Gasen und/oder Dämpfen Wasserstoff und Sauerstoff enthalten ist, oder wenn mit der Anwesenheit von Wasserstoff und Sauerstoff in diesen Gasen und/oder Dämpfen gerechnet werden muß.

Dehydrierte Silberzeolithe werden durch Wasserdampf hydriert. Diese Hydrierung ist eine leicht exotherme Reaktion und führt zu einer Erwärmung des Zeoliths, die an sich erwünscht ist, weil hierdurch Taupunktunterschreitungen ausgeschlossen werden.

Es wurde jedoch festgestellt, daß bereits bei einer Zeolithtemperatur von 65°C die Grenztemperatur erreicht wird, ab der sich die katalytische Rekombination von Wasserstoff und Sauerstoff vollzieht. Durch diese Reaktion wird der Zeolith weiter erwärmt, wodurch wiederum die Reaktion von Wasserstoff und Sauerstoff begünstigt wird. Die Temperatur des Zeoliths kann bis zur Zündtemperatur von Wasserstoff ansteigen.

Der Erfindung liegt daher die Aufgabe zugrunde, ein besseres Verfahren zu schaffen, das die Nachteile der mit den bisher bekannten Adsorbermaterialien betriebene Verfahren vermeidet und eine rasche, wirksame Entfernung von Iod und/oder organische Iodverbindungen mit einer niedrigen Anzahl von Kohlenstoffatomen auch aus wasserstoffhaltigen Gasen und/oder Dämpfen, aus kerntechnischen Anlagen, bei unterschiedlichen, rasch wechselnden und gegebenenfalls extremen Betriebsbedingungen bei oder nach einem Unfall, gewährleistet.

Die Erfindung löst die Augabe dadurch, daß die Iod und/oder Iodverbindungen enthaltenden Gase oder Dämpfe durch eine Schicht aus einem mit Silber und mindestens einem weiteren Schwermetall ausgetauschten, vorzugsweise binderfreien Molekularsieb vom Strukturtyp des Faujasits geleitet werden, vorteilhafterweise durch ein Bett lose geschütteter Sorptionsmittel-Formteilchen (Granalien wie Kügelchen, Stäbchen, Körner, Splitter). Eine weitere vorteilhafte Ausführung der Erfindung ist das Durchleiten der Gase und Dämpfe durch aus Sorptionsmittel-Formteilchen, insbesondere aus Kugeln, gebildete poröse Formkörper, wie durch poröse Platten, poröse Zylinder oder, poröse Hohlkörper. Vorteilhafterweise wird als weiteres Schwermetall Blei verwendet. Die zur Durchführung des Verfahrens zu verwendenden silberbleiausgetauschten Sorptionsmittel bestehen aus Teilchen in Kugelform oder in Form von Granalien wie Stäbchen, Körner oder Splitter mit wenigen Millimetern Durchmesser bzw. Länge, die einen 80-90 %igen Zeolith X- und einen 10 bis 20 %igen Zeolith A-Anteil aufweisen. Bindemittelhaltige silberbleiausgetauschte Zeolithe sind ebenfalls geeignet.

Die Granulate weisen eine hohe mittlere mechanische Festigkeit von ≧ 60 N bei einem Durchmesser von 2-4 mm auf.

Weiterhin ist das erfindungsgemäße Granulat unempfindlich hinsichtlich des Wasserdampfeinflusses auf die Adsorptionsleistung.

Als Ausgangsmaterial für die Sorptionsmittel-Granulate eignet sich besonders gut ein bindemittelfreies Molekularsiebgranulat vom Faujasit-Strukturtyp, das als kugelförmiges Granulat entsprechend den in den DE-OS 3 401 485 und DE-OS 1 203 238 beschriebenen Verfahren hergestellt worden ist.

Der Ionenaustausch mit Silbersalzlösungen wird entsprechend dem Stand der Technik vorgenommen. Beim Silberaustausch liegt das Austauschgleichgewicht auf der Seite des Zeoliths und daher kann auch vorteilhaft bei Raumtemperatur ausgetauscht werden. Außerdem ist die benötigte Silbermenge in einem einmaligen Austausch eintauschbar. Der Silberaustauschgrad kann zwischen 0,1 und 0,95 und der Bleiaustauschgrad entsprechend zwischen 0,05 und 0,9 liegen. Vorzugsweise enthält der Zeolith soviel Silber, daß eine hohe Iodsorptionsleistung gewährleistet ist und soviel Blei, daß keine katalylytische Reaktion mit dem Wasserstoff in der Atmosphäre eintreten kann. Vorzugsweise beträgt der Pb-Anteil von 10 bis 80 % der ausgetauschten Ionen.

Eingesetzt wird ein Zeolith mit folgender oxidischer Formel:

a Na₂O . b PbO c Ag₂O . Al₂O₃ 2,5 ± 0,5 SiO₂,

wobei
b = 0,05 - 0,9,
c = 0,1 - 0,95 und
a + b + c = 1 ist.

Nach dem Ionenaustausch wird das Material im Luftstrom aktiviert. Übliche Aktivertemperaturen liegen bei 400 bis 500 °C.

Im folgenden wird die Erfindung durch einige Versuchsergebnisse in Form von Beispielen erläutert.

### Beispiel 1

30 kg Natriumzeolith X mit einem Wassergehalt (Glühverlust) von 25 % werden unter Zugabe von 15 l 30 %igem Kieselsol eines BET-Werkes von ca. 300 m²/g im Intensivmischer zu einem Granulat von ca. 0,1-0,7 mm Korngröße verarbeitet. Dieses Vorgranulat wurde in einem Granulierteller gegeben.

Dann wurde feinpulvriger Zeolith X fortlaufend dosiert in den rotierenden Teller eingetragen unter gleichzeitigem Aufsprühen des 30 %igen Kieselsäuresols an einer anderen Stelle des Teller auf das sich bewegende Granulat. Dem Kieselsol wurde über eine Injektionsvorrichtung ein Wasserglasstrom beigemischt, so daß ein Verhältnis von Sol zu Wasserglas von 9 : 1 eingstellt wurde. Es wurde ein kugelförmiges Granulat von 2- 4 mm erhalten.

5 kg des obigen kieselgelgebundenen Faujasitgranulats mit einem Wassergehalt von 35 Gew.-% bezogen auf wasserfreies Granulat mit einer Körnung von 2 bis 4 mm wurde in einem gummierten Behälter mit Siebboden eingefüllt. Durch die Granulat-Schicht wurde eine wäßrig alkalische Natriumaluminat-Lösung in den Kreislauf umgepumpt. Zur Herstellung dieser Aluminatlösung wurden 2,4 kg Tonerdehydrat (mit 65 % Al₂O₃) in 4,5 l 45 %iger Natronlauge (Dichte 1,48) bei Siedetemperatur aufgelöst und die entstandene, klare Lösung anschließend mit 33 Litern Wasser verdünnt. Die Aluminatbehandlung erfolgte zunächst über Nacht (15 Stunden) bei Umgebungstemperatur. Dann wurde die umlaufende Aluminat-Lösung durch einen in den Lauge-Kreislauf eingebauten Wärmeaustauscher auf 45°C erwärmt und 5 Stunden umgepumpt; anschließend wurde die Temperatur noch weitere 3 Stunden auf 80°C gehalten.

Die erhaltenen Granalien aus völlig kristallinem Mischzeolith wurden mit Wasser bis zu einem pH-Wert des ablaufenden Waschwassers von 9 bis 10 gewaschen und danach getrocknet.

Nach der Röntgenanalyse bestanden die Granalien zu ca. 80 bis 85 % aus Na-Faujasit neben Natriumzeolith A.

### Beispiel 2

1285 g des in Beispiel 1 beschriebenen aber noch nicht aktivierten Granulats werden in eine abgedunkelte Säule gefüllt, mit 3000 ml einer Bleinitratsalzlösung, die 170 g Bleinitrat enthält versetzt und 8 Stunden lang die Salzlösung umgepumpt. Am Ende des Austausches läßt sich in der Austauschlösung kein Blei mehr nachweisen. Anschließend wird mit 3000 ml einer Silbernitratlösung, die 281 g AgNO₃ enthält, ausgetauscht. Das Granulat wird mit entionisiertem Wasser gewaschen, bei 110°C getrocknet und anschließend im Heißluftstrom bei 450°C aktiviert.

### Beispiel 3

Zur Untersuchung der katalytischen Eigenschaften des Ag, Pb-Zeolithes wurde ein Prüffilter von 2,5 cm Durchmesser und 5 cm Dicke über 20 h mit einem Gemisch aus 15 % H₂, 28 % H₂O-Dampf und 57 % Luft bei einer Temperatur von 200°C mit einer Gasgeschwindigkeit von 30 cm/s beaufschlagt. Es trat keine meßbare Erwärmung des Zeolith-Bettes durch H₂/O₂-Umsetzung auf, während bei Verwendung reiner Ag-Zeolithe Temperaturanstiege bis zu mehreren 100°C beobachtet wurden. Auch eine Erhöhung der Verweilzeit des H₂-haltigen Gasgemisches auf den 3-fachen Wert rührte zu keiner Wärmetönung.

Eine katalytische Reaktion, die zur Entzündung des Wasserstoffes im Bereich von abgasführenden Komponenten führt und den Einsatz des Sorbens verbieten würde, kann daher ausgeschlossen werden.

### Beispiel 4

Zur Untersuchung der Abscheideleistung des Ag, Pb-Zeolithes wurde ein Prüffilter von 2,5 cm Durchmesser und 5 cm Dicke über 0,5 h mit einem Dampf-Luftgemisch von 2,7:1 (Volumenverhältnis) bei einer linearen Gasgeschwindigkeit von 31 cm/s, einer Temperatur von 146°C und einem Druck von ca. 1 bar konditioniert. Anschließend wurde für die Dauer von 0,5 h elementares Radioiod, markiert mit J-131, dem angegebenen Gasstrom zugefügt. Nach Ende der Beaufschlagung wurde der angegebene Gasstrom für weitere 1,5 h aufrechterhalten. Die Jodabscheidung im Prüffilter wurde durch Messung der J-Aktivität in Abschnitten des Filter und in nachgeschalteten imprägnierten Aktivkohlebetten (zur Radiojodabscheidung) ermittelt. Es ergab sich folgendes Versuchsergebnis:

| | | |
|---|---|---|
| Schichtdicke (cm/s) | 5 | 7,5 |
| Verweilzeit (s) | 0,16 | 0,24 |
| Abscheidegrad (%) | 99,58 | 99,76 |
| Dekontaminationsfaktor | 2400 | 4200 |

## Patentansprüche

1. Verfahren zur raschen und nahezu vollständigen Entfernung von Iod und/oder organischen Iodverbindungen mit einer niedrigen Anzahl von Kohlenstoffatomen, insbesondere aus wasserstoffhaltigen Gasen und/oder Dämpfen, dadurch gekennzeichnet, daß die Iod und/oder Iodverbindungen enthaltenden Gase oder Dämpfe durch eine Schicht aus silberbleiausgetauschten Molekularsiebgranulaten vom Strukturtyp des Faujasits geleitet werden.

2. Verfahren nach Anspruch 1, dadurch gekennzeichnet, daß als silberbleiausgetauschte Molekularsiebgranulate bindemittelfreie Granulate eingesetzt werden.

3. Molekularsiebgranulate mit einem Gehalt an Silber und Blei.

## Claims

1. A process for the rapid and almost complete removal of iodine and/or organic iodine compounds containing a small number of carbon atoms, more particularly from hydrogen-containing gases and/or vapours, characterized in that the gases or vapours containing iodine and/or iodine compounds are passed through a layer of silver-lead-exchanged molecular sieve granules of faujasite structure.

2. A process as claimed in claim 1, characterized in that binder-free granules are used as the silver-lead-exchanged molecular sieve granules.

3. Molecular sieve granules containing silver and lead.

## Revendications

1. Procédé pour éliminer rapidement et quasi totalement l'iode et/ou des composés organiques d'iode contenant un faible nombre d'atomes de carbone, notamment de gaz et/ou de vapeurs contenant de l'hydrogène, caractérisé en ce que les gaz ou les vapeurs contenant de l'iode et/ou des composés d'iode sont amenés à traverser une couche de granules de tamis moléculaires du type structural de la faujasite, traités par échange avec de l'argent et du plomb.

2. Procédé suivant la revendication 1, caractérisé en ce qu'on utilise des granules dépourvus de liants comme granules de tamis moléculaires traités par échange avec de l'argent et du plomb.

3. Granules de tamis moléculaires présentant une teneur en argent et en plomb.
